# EUROPÄISCHE PATENTSCHRIFT

(11) **EP 3 891 192 B1**
(45) Veröffentlichungstag und Bekanntmachung des Hinweises auf die Patenterteilung: **30.07.2025**
(21) Anmeldenummer: 19805975.0
(22) Anmeldetag: 21.11.2019
(51) Int. Cl.: C08F 212/08, C08F 236/06, C08F 220/06, C09D 125/10, C09D 109/08, C08F 2/22, D21H 19/48

(54) **VERFAHREN ZUR HERSTELLUNG EINER WÄSSRIGEN POLYMERDISPERSION AUS VINYLAROMATISCHER VERBINDUNG UND KONJUGIERTEM ALIPHATISCHEN DIEN**
METHOD FOR PRODUCING AN AQUEOUS POLYMER DISPERSION FROM VINYLAROMATIC COMPOUND AND CONJUGATED ALIPHATIC DIENE
PROCÉDÉ DE PRÉPARATION D'UNE DISPERSION POLYMÈRE AQUEUSE À PARTIR D'UN COMPOSÉ VINYLAROMATIQUE ET D'UN DIÈNE ALIPHATIQUE CONJUGUÉ

(30) Priorität: 03.12.2018 EP 18209822
(43) Veröffentlichungstag der Anmeldung: 13.10.2021
(73) Patentinhaber: BASF SE, 67056 Ludwigshafen am Rhein (DE)
(72) Erfinder: LAWRENZ, Dirk, 67056 Ludwigshafen (DE); VELING, Nico, 67056 Ludwigshafen (DE); CIMPEANU, Carmen-Elena, 67056 Ludwigshafen (DE)
(74) Vertreter: BASF IP Association
(86) Internationale Anmeldenummer: PCT/EP2019/082145
(87) Internationale Veröffentlichungsnummer: WO 2020/114797

(56) Entgegenhaltungen:
- WO-A1-2009/047233
- WO-A1-2010/094641

## Beschreibung

Die Erfindung betrifft ein Verfahren zur Herstellung einer wässrigen Polymerdispersion, wobei eine vinylaromatische Verbindung und ein konjugiertes aliphatisches Dien in wässrigem Medium in Gegenwart eines Radikalinitiators copolymerisiert werden. Die Erfindung betrifft auch die nach dem Verfahren hergestellten wässrigen Polymerdispersionen und deren Verwendung als Bindemittel, Klebstoff, Schlichtemittel für Fasern, zur Herstellung von Überzügen oder zur Herstellung einer Papierstreichmasse.

Bekannte Bindemittel für Papierstreichmassen auf Basis von Copolymeren aus vinylaromatischen Verbindungen und aliphatischen Dienen sind noch nicht in jeder Hinsicht völlig zufriedenstellend. Bei wässrigen Emulsionscopolymerisaten aus vinylaromatischen Verbindungen und aliphatischen Dienen kommt es aufgrund von Nebenreaktionen der Diene zur Bildung von stark riechenden Diels-Alder-Addukten.

Die EP 2 370 484 lehrt ein Verfahren zur Herstellung von koagulatarmen Styrol-Butadien/Acrylnitril-Dispersionen, bei dem die Dosierung des Acrylnitrils nicht mit Starten der Polymerisation, sondern verzögert begonnen wird, nachdem ein Drittel der Zulaufzeit der übrigen Monomere verstrichen ist.

Aus der WO 99/09251 ist ein Verfahren zur Herstellung von Styrol-Butadien-Copolymeren bekannt, bei dem die Polymerisation so geführt wird, dass man zu der auf Polymerisationstemperatur erwärmten wässrigen Lösung oder Dispersion der abgebauten Stärke zunächst einen Teil der Monomermischung und des Radikalinitiators zugibt und nach dem Anspringen der Polymerisation kontinuierlich die restliche Monomermischung dosiert.

Weiterhin lehrt die EP 1 408 059 ein Verfahren zur Herstellung eines Styrol-Butadien-Latex, indem Styrol und Butadien jeweils entlang eines diskontinuierlichen Gradienten dosiert werden, indem die Zugabemenge des Butadiens konstant reduziert wird und die des Styrols konstant erhöht wird. Die Polymerisation wird mit Ammoniumpersulfat als Radikalinitiator gestartet, wobei die Dosierung aller Monomere zeitgleich startet. Dabei wird die Zugabe mehrfach durch einen Sprung erhöht oder erniedrigt weitergeführt. So erhaltene Dispersionen weisen jedoch im Vergleich zum Verfahren mit einem kontinuierlichen Gradienten nur schwach verringerte Restmengen an 4-Phenylcycohexen (4-PCH) auf. Allen diesen Verfahren mit diskontinuierlicher Zugabe der Monomere ist jedoch gemein, dass Schwefelregler benötigt werden.

WO2010/094641 beschreibt eine Arylcyclohexen-arme wässrige Polymerdispersion und deren Verfahren zur Herstellung durch radikalisch initiierte Emulsionspolymerisation aus den drei Monomertypen: vinylaromatische Verbindung, konjugiertes aliphatisches Dien und ethylenisch ungesättigte Säure.

Der Erfindung liegt die Aufgabe zugrunde, ein Verfahren zur Herstellung wässriger Polymerdispersionen auf Basis von Copolymerisaten aus Vinylaromaten und konjugierten aliphatischen Dienen zur Verfügung zu stellen, die einen geringeren Anteil an 4-Phenylcyclohexen aufweisen. Weiterhin sollen sie beim Einsatz in Papierstreichmassen gute anwendungstechnische Eigenschaften zeigen, insbesondere eine schwache Vergilbung des Papiers bewirken.

Die Aufgabe wird erfindungsgemäß gelöst durch ein Verfahren zur Herstellung einer wässrigen Polymerdispersion durch radikalisch initiierte wässrige Emulsionspolymerisation, indem man in einem wässrigen Medium

| | |
|---|---|
| (a) 40 bis 75 Gew.-Teile | mindestens einer vinylaromatischen Verbindung und |
| (b) 24,9 bis 59,9 Gew.-Teile | mindestens eines konjugierten aliphatischen Diens |
| (c) 0,1 bis 10 Gew.-Teile | mindestens eines Säuregruppen enthaltenden Monomers und |
| (d) 0 bis 20 Gew.-Teile | mindestens eines sonstigen monoethylenisch ungesättigten Monomers, |

wobei sich die Mengen der Monomeren (a) bis (d) auf 100 Gew.-Teile aufsummieren, nach einem Monomerzulaufverfahren in Gegenwart eines Radikalinitiators polymerisiert, mit der Maßgabe, dass
- die vinylaromatische Verbindung unter Polymerisationsbedingungen in einem kontinuierlichen Mengenstrom über einen Zeitraum von mindestens 120 Minuten zudosiert wird,
- die Dosierung des konjugierten aliphatischen Diens zu einem Zeitpunkt gestartet wird, zu dem bereits mindestens 5 % und höchstens 30 % der vinylaromatischen Verbindung in einem kontinuierlichen Mengenstrom zudosiert sind und
- während der Polymerisation kein Kettenübertragungsmittel ausgewählt unter aliphatischen und/oder araliphatischen Halogenverbindungen, organischen Thioverbindungen und substituierten Thiolen eingesetzt wird und
- gegebenenfalls die Polymerisation in einem wässrigen Polymerisationsgemisch initiiert wird, das bis zu 5 % der vinylaromatischen Verbindung enthält und kein aliphatisches Dien enthält.

Wenn im Rahmen dieser Anmeldung von 5 % der vinylaromatischen Verbindung die Rede ist, so bezieht es sich auf die Gesamtmenge an vinylaromatischer Verbindung.

Wenn nachfolgend eine Mengenangabe in Gew.-Teile gemacht wird, so bezieht sich diese, sofern nicht anders angegeben, auf 100 Gew.-Teile Gesamtmonomere.

Zur Herstellung der wässrigen Polymerdispersionen können nachfolgende ethylenisch ungesättigte Monomere (a), (b), (c) und (d) eingesetzt werden.

Als vinylaromatische Verbindungen (Monomere der Gruppe (a)) kommen beispielsweise Styrol, *α*-Methylstyrol und/oder Vinyltoluol in Betracht. Aus dieser Gruppe von Monomeren wird vorzugsweise Styrol gewählt.

Die Gesamtmenge der Monomere (a) beträgt 40 bis 75 Gew.-Teile und vorzugsweise 45 bis 70 Gew.-Teile, insbesondere 50 bis 65 Gew.-Teile bezogen auf 100 Gew.-Teile Gesamtmonomere (a bis d).

Als konjugiertes aliphatisches Dien (Monomere der Gruppe (b)) seien Butadien-1,3, Isopren, Pentadien-1,3, Dimethylbutadien-1,3 und Cyclopentadien beispielhaft genannt. Aus dieser Gruppe von Monomeren setzt man bevorzugt Butadien-1,3 und/oder Isopren ein.

Die Gesamtmenge der Monomere (b) beträgt 24,9 bis 59,9 Gew.-Teile, vorzugsweise 29,9 bis 54,9 Gew.-Teile und insbesondere 34,9 bis 49,9 Gew.-Teile bezogen auf 100 Gew.-Teile Gesamtmonomere.

Als Säuregruppen enthaltende Monomere (Monomere (c)) seien beispielhaft genannt ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende *α*,*β*-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt werden Acrylsäure, Methacrylsäure und Itaconsäure verwendet. Die genannten Säuren können sowohl als einzige Komponente als auch ihrer Kombination eingesetzt werden.

Die Säuregruppen enthaltenden Monomeren können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel.

Die Gesamtmenge der Monomere (c) beträgt 0,1 bis 10 Gew.-Teile, vorzugsweise 0,1 bis 8 Gew.-Teile oder 1 bis 6 Gew.-Teile eines oder mehrerer Säuregruppen enthaltenden Monomers bezogen auf 100 Gew.-Teile Gesamtmonomere.

Sonstige monomethylenisch ungesättigte Monomere (d) sind von den Monomeren der Gruppen (a), (b) und (c) verschiedene Monomere. Bevorzugt werden sie ausgewählt unter Acrylamid und Methacrylamid, Vinylestern von gesättigten C₁- bis C₁₈-Carbonsäuren, vorzugsweise Vinylacetat, sowie Estern der Acrylsäure und der Methacrylsäure mit einwertigen C₁- bis C₁₈-Alkoholen wie Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, sec.-Butylacrylat. sec.-Butylmethacrylat, tert.-Butylacrylat, tert.-Butylmethacrylat, Pentylacrylate, Pentylmethacrylate, 2-Ethylhexylacrylat, 2-Ethylhexylmethacrylat, Allylestern gesättigter Carbonsäuren, Vinylethern, Vinylketonen, Dialkylestern ethylenisch ungesättigter Carbonsäuren, N-Vinylpyrrolidon, N-Vinylpyrrolidin, N-Vinylformamid, N,N-Dialkylamonialkylacrylamiden, N,N-Dialkylaminoalkylmethacrylamiden, N,N-Dialkylaminoalkylacrylaten, N,N-Dialkylaminoalkylmethacrylaten, Vinylchlorid und Vinylidenchlorid (Monomere der Gruppe (d)).

Diese Gruppe von Monomeren wird gegebenenfalls zur Modifizierung der Polymeren eingesetzt. Der Gesamtmenge aller sonstigen Monomere darf bis zu 20 Gew.-Teile bezogen auf 100 Teile Gesamtmonomer betragen. Bezogen auf 100 Gew.-Teile der Gesamtmonomere beträgt der Anteil an einem oder mehreren Monomeren der Gruppe (d) 0 bis 20 Gew.-Teile, bevorzugt 0,1 bis 15 Gew.-Teile und insbesondere 0,5 bis 10 Gew.-Teile.

Sofern es sich um Acrylnitril und/oder Methacrylnitril handelt, wird es bevorzugt in einer Menge von 2 bis 12 Gew.-Teile und insbesondere von 4 bis 9 Gew.-Teilen bezogen auf auf 100 Gew.-Teile Gesamtmonomer eingesetzt.

Bevorzugt wird ein Verfahren, bei dem die vinylaromatische Verbindung Styrol und/oder Methylstyrol und das konjugierte aliphatische Dien 1,3-Butadien und/oder Isopren ist. Besonders vorteilhaft ist das Verfahren zur Herstellung von Styrol-Butadien-Dispersionen.

Mit Vorteil werden

| | |
|---|---|
| (a) 60 bis 75 Gew.-Teile | mindestens einer vinylaromatischen Verbindung und |
| (b) 24,9 bis 39,9 Gew.-Teile | mindestens eines konjugierten aliphatischen Diens |
| (c) 0,1 bis 8 Gew.-Teile | mindestens eines Säuregruppen enthaltenden Monomers und |
| (d) 0 bis 10 Gew.-Teile | mindestens eines sonstigen monoethylenisch ungesättigten Monomers, |

wobei sich die Mengen der Monomeren (a) bis (d) auf 100 Gew.-Teile aufsummieren, polymerisiert.

Insbesondere bevorzugt werden

| | |
|---|---|
| (a) 60 bis 70 Gew.-Teile | mindestens einer vinylaromatischen Verbindung |
| (b) 29 bis 39 Gew.-Teile | mindestens eines konjugierten aliphatischen Diens |
| (c) 1 bis 6 Gew.-Teile | mindestens eines Säuregruppen enthaltenden Monomers und |
| (d) 0 bis 5 Gew.-Teile | mindestens eines sonstigen monoethylenisch ungesättigten Monomers, |

wobei sich die Mengen der Monomeren (a) bis (d) auf 100 Gew.-Teile aufsummieren, polymerisiert.

Die Emulsionspolymerisation erfolgt in einem wässrigen Medium. Hierbei kann es sich z. B. um vollständig entsalztes Wasser handeln oder auch um Mischungen aus Wasser und einem damit mischbaren Lösemittel wie Methanol, Ethanol, Ethylenglykol, Glycerin, Zuckeralkoholen wie Sorbitol oder Tetrahydrofuran. Die Gesamtmenge an wässrigem Medium wird dabei so bemessen, dass die erhaltene wässrige Polymerdispersion einen Feststoffgehalt von 20 bis 70 Gew.-%, häufig 30 bis 65 Gew.-% und oft 40 bis 60 Gew.-% aufweist.

Bei dem erfindungsgemäßen Verfahren verwendet man Radikalinitiatoren (auch als radikalische Polymerisationsinitiatoren bezeichnet) also Initiatoren, die unter den Reaktionsbedingungen Radikale bilden. Es kann sich dabei sowohl um Peroxide, als auch um Azoverbindungen handeln. Selbstverständlich kommen auch Redoxinitiatorsysteme in Betracht.

Als Peroxide können prinzipiell anorganische Peroxide und/oder organische Peroxide eingesetzt werden. Als anorganische Peroxide eigen sich beispielsweise Wasserstoffperoxid sowie Peroxodisulfate, wie die Mono- oder Di-Alkalimetall- oder Ammoniumsalze der Peroxodischwefelsäure, beispielsweise deren Mono- und Di-Natrium-, -Kalium- oder Ammoniumsalze. Als organische Peroxide eignen sich beispielsweise Alkylhydroperoxide wie tert.-Butylhydroperoxid, Arylhydroperoxide wie p-Menthyl- oder Cumolhydroperoxid, sowie Dialkyl- oder Diarylperoxide, wie Di-tert.-Butyl-, Dibenzoyl- oder Di-Cumolperoxid.

Als Azoverbindung finden im Wesentlichen 2,2 ' -Azobis(isobutyronitril), 2,2'-Azo-bis-(2-methylbutyronitril), 2,2 ' -Azobis(2,4-dimethylvaleronitril), 2,2 ' -Azobis(N,N'-dimethyl-enisobutyroamidin)dihydrochlorid -und 2,2'-Azobis(amidinopropyl)dihydrochlorid (AlBA, entspricht V-50 von Wako Chemicals) Verwendung.

Redoxinitiatorsysteme sind kombinierte Systeme, die aus wenigstens einem organischen oder anorganischen Reduktionsmittel und wenigstens einem Peroxid zusammengesetzt sind. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Acetonbisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Bevorzugte Radikalinitiatoren sind anorganische und organische Peroxide bevorzugt Ammonium- oder Alkalimetallsalze von Peroxosulfaten oder Peroxodisulfaten, sowie tert.-Butyl-, p-Mentyl- und Cumylhydroperoxid, insbesondere ausgewählt unter Natrium- und Kaliumperoxodisulfat, tert.-Butylhydroperoxid und Cumylhydroperoxid. Besonders bevorzugt werden dabei sowohl mindestens ein anorganisches Peroxid bevorzugt Peroxodisulfat, insbesondere Natriumperoxodisulfat, und ein organisches Peroxid bevorzugt Alkylhydroperoxid, insbesondere t-Butylhydroperoxid verwendet.

Die Polymerisation erfolgt in der Regel unter Einsatz von 0,1 bis 5 Gew.-Teilen des Radikalinitiators, vorzugsweise 0,5 bis 4 Gew.-Teilen des Radikalinitiators, vorzugsweise mindestens eines anorganischen und/oder organische Peroxids, jeweils bezogen auf 100 Gew.-Teile Gesamtmonomere. Bevorzugt beträgt das Verhältnis der Gesamtmenge an anorganischem Peroxid zur Gesamtmenge an organischem Peroxid 1/10 zu 10/1, bevorzugt 1/5 zu 5/1, insbesondere 1/3 zu 3/1 über das gesamte Verfahren betrachtet.

Unter Initiierung der Polymerisationsreaktion wird der Start der Polymerisationsreaktion der im Polymerisationsgefäß vorliegenden Monomeren durch Zerfall des Radikalinitiators verstanden.

Um die Monomere zu polymerisieren, bereitet man zunächst eine wässrige Lösung, die ein Schutzkolloid und/oder einen Emulgator in gelöster Form sowie gegebenenfalls Polystyrolsaat enthält. Diese Mischung wird vorzugsweise auf die Temperatur erhitzt, bei der die Polymerisation der Monomeren erfolgen soll. Sobald die jeweils gewünschte Polymerisationstemperatur erreicht ist oder innerhalb einer Zeitspanne von 1 bis 15 Minuten, vorzugsweise 1 bis 10 Minuten nach dem Erreichen der Polymerisationstemperatur beginnt man mit dem Dosieren der Monomeren (a) und (c) und gegebenenfalls (d). Gemäß dieser Variante werden keine Monomere vorgelegt. Die Polymerisation startet, wenn das Polymerisationsgemisch vinylaromatische Verbindung und Radikalinitiator enthält und eine Temperatur im Bereich von ≥ 80° C bis ≤ 95° C erreicht.

Gemäß einer bevorzugten Ausführungsform wird die Polymerisation in einem wässrigen Polymerisationsgemisch initiiert, das bis zu 5 % der vinylaromatischen Verbindung und kein aliphatisches Dien enthält. Gemäß dieser Variante werden Monomere vorgelegt. Hiernach startet die Polymerisation, wenn
- 0,1 bis 5 % der vinylaromatischen Verbindung vorgelegt sind,
- die Reaktionstemperatur auf eine Temperatur im Bereich von ≥ 80° C bis ≤ 95° C eingestellt ist und
- Radikalinitiator, bevorzugt 0,1 bis 0,5 Gew.-Teile eines anorganischen Peroxids, bezogen auf 100 Gew.-Teile Gesamtmonomer, vorgelegt ist.

Dabei ist die Reihenfolge, in der die Bedingungen eingestellt werden, nicht ausschlaggebend. Bevorzugt wird die vinylaromatische Verbindung vorgelegt und das anorganische Peroxid nach Erwärmen auf die Reaktionstemperatur im Bereich von 80 - 95° C zugegeben und damit die Polymerisation initiiert.

Gemäß einer bevorzugten Verfahrensvariante wählt man einen Anteil anorganischen Peroxid, bevorzugt ein Ammoniumsalz oder ein Alkalimetallsalz von einem Peroxodisulfat, zum Initiieren der Polymerisation und dosiert anschließend die restliche Radikalinitiatormenge, vorzugsweise das anorganischen Peroxid wie auch ein organisches Peroxid in einem kontinuierlichen Mengenstrom zu. Dabei startet man bevorzugt die Dosierung des organischen Peroxids ab einem Zeitpunkt, zu dem bereits mindestens 5 % und höchstens 20 % der vinylaromatischen Verbindung in einem kontinuierlichen Mengenstrom zudosiert sind.

Besonders bevorzugt wählt man 0,1 bis 0,5 Gew.-Teile anorganisches Peroxid, bevorzugt ein Ammoniumsalz oder ein Alkalimetallsalz von einem Peroxodisulfat, zum Initiieren der Polymerisation und dosiert direkt anschließend 0,1 bis 2,0 Gew.-Teile anorganisches Peroxid zu und startet die Dosierung von 0,1 bis 2,0 Gew.-Teilen, jeweils bezogen auf 100 Gew.-Teile Gesamtmonomer, des organisches Peroxid ab einem Zeitpunkt, zu dem bereits mindestens 5 % und höchstens 20 % der vinylaromatischen Verbindung zudosiert sind, wobei die Dosierung des anorganischen Peroxids, des organischen Peroxids wie auch der vinylaromatischen Verbindung jeweils in einem kontinuierlichen Mengenstrom erfolgt.

Gemäß einer bevorzugten Variante wird das anorganische Peroxid im Anschluss an die Initiierung während der gesamten Polymerisation kontinuierlich dosiert.

Weiterhin wird ein Verfahren bevorzugt, gemäß dem man ein organisches Peroxid ab einem Zeitpunkt zudosiert, zu dem bereits mindestens 5 %, besonders bevorzugt mindestens 8, insbesonderes mindestens 10 % und höchstens 20 % der Gesamtmenge an vinylaromatischer Verbindung unter Polymerisationsbedingungen zudosiert sind.

Unter Polymerisationsbedingungen sind dabei generell diejenigen Radikalinitiatormengen, Temperaturen und Drücke zu verstehen, unter denen die radikalisch initiierte wässrige Emulsionspolymerisation nicht zum Stillstand kommt. Die Polymerisation ist dabei abhängig von Art und Menge des verwendeten Radikalinitiators.

Bevorzugte Polymerisationsbedingungen sind eine Temperatur im Bereich von ≥ 80° C bis ≤ 105° C, bevorzugt ≥ 85° C bis ≤ 100° C. Die Dosierung des konjugierten aliphatischen Diens erfolgt in der Regel bei erhöhtem Druck. Die Dosierung des konjugierten aliphatischen Diens findet bevorzugt bei einem Druck im Bereich von 5 bis 15 bar statt. Der erhöhte Druck bewirkt, dass sich beispielsweise das bei Normaldruck und Raumtemperatur gasförmige 1,3-Butadien weitgehend im Polymerisationsgemisch befindet.

Die Dosierung der Monomere erfolgt bevorzugt kontinuierlich, also ohne Unterbrechung. Dabei werden die Monomer bevorzugt mit einer Dosierrate dosiert, die nicht mehr als 30 %, vorzugsweise nicht mehr als 20 %, von dem Durchschnittswert des jeweiligen Gesamtzulaufs abweicht. Gemäß einer bevorzugten Ausführungsform entspricht die Dosierrate der Monomere (Zunahme der Monomere) in etwa der Polymerisationsrate der Monomere (Abnahme der Monomere).

Gemäß dem erfindungsgemäßen Verfahren dosiert man das konjugierte aliphatische Dien erst ab einem Zeitpunkt zu, bei dem bereits mindestens 5 %, bevorzugt mindestens 8, insbesondere mindestens 10 % der der Gesamtmenge an vinylaromatischer Verbindung in einem kontinuierlichen Mengenstrom zudosiert sind.

Die vinylaromatische Verbindung wird unter Polymerisationsbedingungen bevorzugt in einem kontinuierlichen Mengenstrom über einen Zeitraum von mindestens 120 Minuten, bevorzugt über einen Zeitraum von 180 bis 300 Minuten, insbesondere über einen Zeitraum von 210 bis 270 Minuten zudosiert.

Das konjugierte aliphatische Dien wird in einem kontinuierlichen Mengenstrom bevorzugt über einen Zeitraum von mindestens 60 Minuten, besonders bevorzugt über einen Zeitraum von 120 bis 240 Minuten insbesondere über einen Zeitraum von 150 bis 210 Minuten zudosiert, wobei besonders bevorzugt zusätzlich die vinylaromatische Verbindung in einem kontinuierlichen Mengenstrom über einen Zeitraum von mindestens 120 Minuten, bevorzugt über einen Zeitraum von 180 bis 300 Minuten, insbesondere über einen Zeitraum von 210 bis 270 Minuten zudosiert wird.

Gemäß einer erfindungsgemäßen Ausführungsform wird die Polymerisation in Gegenwart einer abgebauten Stärke durchgeführt. Bei der Emulsionscopolymerisation setzt man bevorzugt 15 bis 100 Gew.-Teile einer abgebauten Stärke auf 100 Gew.-Teile der Monomeren ein.

Als Ausgangsstärken zur Herstellung der erfindungsgemäß zu verwendenden abgebauten Stärken eignen sich alle nativen Stärken wie Stärken aus Mais, Weizen, Hafer, Gerste, Reis, Hirse, Kartoffeln, Erbsen, Tapioka, Sorghum oder Sago. Von Interesse als Ausgangsstärken sind außerdem solche natürlichen Stärken, die einen hohen Amylopektingehalt aufweisen wie Wachsmaisstärke und Wachskartoffelstärke. Der Amylopektingehalt dieser Stärken liegt oberhalb von 90 %, meistens bei 95 bis 100 %.

Weiterhin können mittels Veretherung oder Veresterung modifizierte Stärken zur Herstellung der erfindungsgemäßen Polymerdispersionen eingesetzt werden. Durch die Modifizierung findet in der Regel auch ein Abbau statt. Solche Produkte sind bekannt und im Handel erhältlich. Sie werden beispielsweise durch Veresterung von nativer Stärke oder abgebauter nativer Stärke mit anorganischen oder organischen Säuren, deren Anhydriden oder Chloriden hergestellt. Von besonderem Interesse sind phosphatierte und acetylierte abgebaute Stärken. Die gängigste Methode zur Veretherung von Stärken besteht in der Behandlung von Stärke mit organischen Halogenverbindungen, Epoxiden oder Sulfaten in wässriger alkalischer Lösung. Bekannte Stärkeether sind Alkylether, Hydroxyalkylether, Carboxyalkylether und Allylether. Außerdem eignen sich die Umsetzungsprodukte von Stärken mit 2,3-Epoxipropyltrimethylammoniumchlorid.

Weitere geeignete Stärken sind kationisch modifizierte Stärken, d.h. Stärkeverbindungen, welche Aminogruppen oder Ammoniumgruppen aufweisen.

Der Abbau der Stärken kann enzymatisch, oxidativ oder hydrolytisch durch Einwirkung von Säuren oder Basen erfolgen. Der Abbau von Stärke ist allgemein bekannt und wird beispielsweise in der EP 2580257 beschrieben. Abgebaute Stärken sind im Handel erhältlich. Man kann für die Polymerisation eine abgebaute Stärke einsetzen oder diese in situ herstellen und anschließend in ihrer Gegenwart die Polymerisation durchführen.

Besonders bevorzugt sind abgebaute native Stärken, insbesondere zu Maltodextrin abgebaute native Stärken.

Bevorzugt werden abgebauten Stärken mit einer intrinsischen Viskosität *η*i von ≤0,07 dl/g oder ≤0,05 dl/g. Die intrinsische Viskosität *η*i der abgebauten Stärken liegt vorzugsweise in dem Bereich von 0,02 bis 0,06 dl/g. Die intrinsische Viskosität *η*i wird bestimmt gemäß DIN EN1628 bei einer Temperatur von 23° C.

Um die Emulgierung der Monomeren in dem wässrigen Medium zu unterstützen, kann man die üblicherweise eingesetzten Schutzkolloide und/oder Emulgatoren verwenden. Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420.

Als Emulgatoren kommen grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol, insbesondere von 5000 bis 50000 g/mol.

Geeignete Emulgatoren sind beispielsweise ethoxylierte C₈- bis C₃₆-Fettalkohole mit einem Ethoxylierungsgrad von 3 bis 50, ethoxylierte Mono-, Di- und Tri- C₄- bis C₁₂- Alkylphenole mit einem Ethoxylierungsgrad von 3 bis 50, Alkalimetallsalze von Dialkylestern der Sulfobernsteinsäure, Alkalimetall- und Ammoniumsalze von C₈- bis C₁₂-Alkylsulfaten, Alkalimetall- und Ammoniumsalze von C₁₂- bis C₁₈-Alkylsulfonsäuren und Alkalimetall- und Ammoniumsalze von C₉- bis C₁₈-Alkylarylsulfonsäuren. Kationaktive Emulgatoren sind z.B. Verbindungen mit mindestens einer Amino- oder Ammoniumgruppe und mindestens einer C₈-C₂₂-Alkylgruppe.

Als Emulgatoren haben sich ferner Verbindungen der allgemeinen Formel I 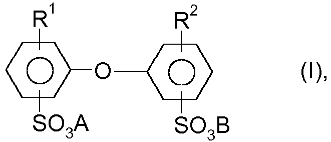 worin R¹ und R² C₄- bis C₂₄-Alkyl bedeuten und einer der Reste R¹ oder R² auch für Wasserstoff stehen kann, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder H-Atome, wobei R¹ und R² nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, R¹ ein verzweigter Alkylrest mit 12 C-Atomen und R² ein H-Atom oder R¹ sind. Häufig werden technische Gemische verwendet, die einen Anteil von 50 bis 90 Gew.-% des monoalkylierten Produktes aufweisen, beispielsweise Dowfax^{®} 2A1 (Marke der Dow Chemical Company). Die Verbindungen I sind allgemein bekannt, z.B. aus US-A 4 269 749, und im Handel erhältlich.

Falls Emulgatoren und/oder Schutzkolloide als Hilfsmittel zum Dispergieren der Monomeren mitverwendet werden, betragen die davon verwendeten Mengen beispielsweise 0,1 bis 5 Gew.-Teile bezogen auf 100 Gew.-Teile Monomere.

Gemäß einer Verfahrensvariante wird die Polymerisation in Gegenwart einer Polystyrolsaat durchgeführt, vorzugsweise in Gegenwart einer wässrigen Dispersion von feinteiligem Polystyrol mit einem mittleren Teilchendurchmesser von 20 bis 40 nm (bestimmt mittels Ultrazentrifuge).

Um die Eigenschaften der Polymeren zu modifizieren, kann man die Emulsionspolymerisation gegebenenfalls in Gegenwart mindestens eines Kettenübertragungsmittels, das nicht schwefel- oder halogenhaltig ist, durchführen. Sie werden üblicherweise eingesetzt, um das Molekulargewicht der durch eine radikalisch wässrige Emulsionspolymerisation zugänglichen Polymerisate zu reduzieren bzw. zu kontrollieren.

Das erfindungsgemäße Verfahren umfasst nicht den Einsatz von Kettenübertragungsmittel ausgewählt unter aliphatischen und/oder araliphatischen Halogenverbindungen, organische Thioverbindungen und substituierte Thiole während der Polymerisation.

Beispiele für Kettenübertragungsmittel, die nicht schwefel- oder halogenhaltig sind Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation ein Kettenübertragungsmittel einsetzt, so beträgt die jeweils verwendete Menge beispielsweise 0,01 bis 5, vorzugsweise 0,1 bis 1 Gew.-Teile, bezogen auf 100 Gew.-Teile der bei der Polymerisation eingesetzten Monomere. Die Kettenübertragungsmittel werden vorzugsweise zusammen mit den Monomeren in die Vorlage dosiert. Sie können jedoch auch teilweise oder vollständig in der Vorlage anwesend sein. Sie können auch stufenweise gegenüber den Monomeren versetzt zudosiert werden. Besonders bevorzugt wird ein Verfahren bei dem während der Polymerisation kein Kettenübertragungsmittel zugegen ist.

Um die Polymerisationsreaktion zu vervollständigen reicht es in den meisten Fällen, das Reaktionsgemisch nach Zugabe sämtlicher Monomeren noch beispielsweise 1 bis 3 Stunden bei der Polymerisationstemperatur zu rühren. Üblicherweise hat man zu diesem Zeitpunkt einen Umsatz von um die 95% erreicht.

Um den Umsatz noch weiter zu erhöhen, kann man beispielsweise weiteren Radikalinitiator aus der Gruppe der oben genannten Initiatoren zum Reaktionsgemisch zugeben bzw. die Zugabe verlängern und eine sogenannte "Nachpolymerisation", also eine Polymerisation um Umsätze >95% bis zu 99% zu erreichen.

Eine solche Nachpolymerisation kann bei gleicher, niedrigerer oder auch höherer Temperatur wie die Hauptpolymerisation durchgeführt werden. Beispielsweise dosiert man in dieser Phase 0,1 bis 1,5 Gew.-Teile, bezogen auf 100 Gew.-Teile der bei der Polymerisation eingesetzten Monomere, an anorganischem Peroxid, bevorzugt Natriumperoxodisulfat, als Initiator zu und stellt die Polymerisationstemperatur auf eine Temperatur im Bereich von 80 bis 120 ° C ein.

Der pH-Wert kann während der Polymerisation beispielsweise 1 bis 5 betragen. Nach Ende der Polymerisation bei einem Umsatz >95% wird der pH-Wert beispielsweise auf einen Wert zwischen 6 und 7 eingestellt.

Weiterhin kann auch eine chemische Desodorierung durchgeführt werden. Sofern noch Spuren von Restmonomeren entfernt werden sollen, kann dies auch chemisch unter Einwirkung von Redoxinitiatorsystemen, wie sie in der DE-A 44 35 423, DE-A 44 19 518 sowie in der DE-A 44 35 422 aufgeführt sind, erfolgen. Als Oxidationsmittel eignen sich insbesondere die obengenannten organischen und/oder anorganischen Peroxide. Geeignete Reduktionsmittel sind vorzugsweise Natriumdisulfit, Natriumhydrogensulfit, Natriumdithionit, Natriumhydroxymethansulfinat, Formamidinsulfinsäure, Acetonbisulfit (= Natriumhydrogensulfit-Additionsproduckt an Aceton), Ascorbinsäure bzw. reduzierend wirkende Zuckerverbindungen, oder wasserlösliche Mercaptane, wie Mercaptoethanol.

Die Behandlung mit dem Redoxinitiatorsystem wird im Temperaturbereich von 60 bis 100° C, vorzugsweise bei 70 bis 90° C durchgeführt. Die Redoxpartner können der Dispersion unabhängig voneinander vollständig, portionsweise bzw. kontinuierlich über einen Zeitraum von 10 Minuten bis 4 Stunden zugegeben werden. Zur Verbesserung der Nachpolymerisationswirkung der Redoxinitiatorsysteme können der Dispersion auch lösliche Salze von Metallen wechselnder Wertigkeit, wie Eisen-, Kupfer oder Vanadium-salze, zugesetzt werden. Häufig werden auch Komplexbildner zugegeben, die die Metallsalze unter den Reaktionsbedingungen in Lösung halten.

Im Anschluss an die Polymerisationsreaktion (Hauptpolymerisation + Nachpolymerisation) und gegebenenfalls chemischer Desodorierung kann es erforderlich sein, die wässrigen Polymerdispersionen weitgehend frei von Geruchsträgern, wie Restmonomeren und anderen organischen flüchtigen Bestandteilen zu gestalten, was auch als physikalische Desodorierung bezeichnet wird. Dies kann in an sich bekannter Weise physikalisch durch destillative Entfernung (insbesondere über Wasserdampfdestillation) oder durch Abstreifen mit einem inerten Gas erreicht werden.

Die vorliegende Erfindung betrifft auch die nach dem erfindungsgemäßen Verfahren erhältlichen Dispersionen. Diese sind nahezu koagulatfreie wässrige Dispersionen. Die Menge an Koagulat liegt im ppm-Bereich und beträgt vorzugsweise weniger als 100 ppm, insbesondere weniger als 50 ppm. Weiterhin weisen sie eine einheitliche Teilchengröße auf und in der Regel einen Feststoffgehalt von ca. 50 Gew.-%, bevorzugt im Bereich von 45 bis 55 Gew.-%. Die erfindungsgemäßen Dispersionen weisen einen geringen Anteil an 4-Phenylcycohexen auf.

Die erfindungsgemäßen wässrigen Polymerdispersionen werden als Bindemittel, Klebstoff, Schlichtemittel für Fasern, zur Herstellung von Überzügen oder zur Herstellung von Papierstreichmassen verwendet. Die erfindungsgemäßen wässrigen Polymerdispersionen eignen sich sowohl zum Schlichten von Textilfasern und auch zum Schlichten von Mineralfasern, insbesondere Glasfasern. Aufgrund ihrer guten Klebkraft, insbesondere bei Verwendung von Comonomeren, welche zu einer niedrigen Glasübergangstemperatur des Copolymers (z. B. kleiner 20° C) führen, kann man sie außerdem als Klebstoff zum Beispiel zur Herstellung von Laminaten und zur Herstellung von Überzügen wie zum Beispiel Barrierebeschichtungen verwenden. Bevorzugt werden die erfindungsgemäßen wässrigen Polymerdispersionen als Bindemittel in Papierstreichmassen eingesetzt.

Ein Gegenstand der Erfindung ist daher auch eine Papierstreichmasse, enthaltend
(i) anorganisches Pigment und
(ii) eine oben beschriebene, nach dem erfindungsgemäßen Verfahren erhältliche wässrige Polymerdispersion
(iii) und gegebenenfalls weitere Hilfsstoffe.

Papierstreichmassen enthalten neben Wasser im allgemeinen Pigmente, Bindemittel und Hilfsstoffe zur Einstellung der erforderlichen rheologischen Eigenschaften, z. B. Verdicker. Die Pigmente sind üblicherweise in Wasser dispergiert. Die Papierstreichmasse enthält Pigmente in einer Menge von vorzugsweise mindestens 80 Gew.-%, z. B. 80 bis 95 Gew.-% oder 80 bis 90 Gew.-%, bezogen auf den Gesamtfeststoffgehalt.

In Betracht kommen insbesondere Weißpigmente. Geeignete Pigmente sind beispielsweise Metallsalzpigmente wie z.B. Calciumsulfat, Calciumaluminatsulfat, Bariumsulfat, Magnesiumcarbonat und Calciumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb^{®} 60, Hydrocarb^{®} 60 oder Hydrocarb^{®} 90 ME. Weitere geeignete Pigmente sind z.B. Kieselsäuren, Aluminiumoxide, Aluminiumhydrat, Silikate, Titandioxid, Zinkoxid, Kaolin, Tonerde, Talkum oder Siliziumdioxid. Geeignete weitere Pigmente sind z.B. verfügbar als Capim^{®} MP 50 (Clay), Hydragloss^{®} 90 (Clay) oder Talcum C10.

Die Papierstreichmasse enthält die erfindungsgemäß hergestellte Polymerdispersion als alleiniges Bindemittel oder in Kombination mit weiterem Bindemittel. Die wichtigsten Aufgaben von Bindemitteln in Papierstreichmassen sind, die Pigmente an das Papier und die Pigmente untereinander zu verbinden und teilweise Hohlräume zwischen Pigmentpartikeln aufzufüllen.

Auf 100 Gew.-Teile Pigmente verwendet man beispielsweise 1 bis 50 Gew.-Teile, vorzugsweise 1 bis 25 Gew.-Teile oder 5 bis 20 Gew.-Teile des erfindungsgemäßen Polymers (fest, d.h. ohne Wasser oder sonstige bei 21° C, 1 bar flüssige Lösemittel).

Bevorzugt wird eine Papierstreichmasse, die die Polymerisate der wässrigen Polymerdispersion in einer Menge von 1 bis 50 Gew.-Teilen, bezogen auf die Gesamtmenge an Pigmenten, sowie Pigmente in einer Menge von 80 bis 95 Gewichtsteilen, bezogen auf den Gesamtfeststoffgehalt, sowie einen Hilfsstoff enthält, und deren Pigment ausgewählt sind aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und deren Hilfsstoff ausgewählt wird aus der Gruppe bestehend aus Verdickern, weiteren polymeren Bindemitteln, Co-Bindemitteln, optischen Aufhellern, Füllstoffen, Verlaufshilfsmitteln, Dispergatoren, Tensiden, Gleitmitteln, Neutralisationsmitteln, Entschäumern, Entlüftungsmitteln, Konservierungsmitteln und Farbstoffen.

Die weiteren, von den erfindungsgemäß hergestellten Polymerisaten verschiedenen, synthetischen Bindemittel sind allgemein bekannt und werden beispielsweise in D. Urban und K. Takamura, Polymer Dispersions and Their Industrial Applications, 2002 ,Wiley-VCH Verlag GmbH, Weinheim, Kap. 4.4.4 Seite 90 ff. beschrieben, auf dessen Offenbarung ausdrücklich Bezug genommen wird.

Als weitere Bindemittel in Betracht kommen Bindemittel auf natürlicher Basis, insbesondere Bindemittel auf Stärkebasis sowie von den erfindungsgemäß hergestellten Polymerisaten verschiedene, synthetische Bindemittel, insbesondere durch Emulsionspolymerisation herstellbare Emulsionspolymerisate. Unter Bindemitteln auf Stärkebasis soll in diesem Zusammenhang jegliche native, modifizierte oder abgebaute Stärke verstanden werden. Native Stärken können aus Amylose, Amylopektin oder deren Gemischen bestehen. Bei modifizierten Stärken kann es sich um oxydierte Stärke, Stärkeester oder Stärkeether handeln. Durch Hydrolyse kann das Molgewicht der Stärke verringert werden (abgebaute Stärke). Als Abbauprodukte kommen Oligosaccharide oder Dextrine in Betracht. Bevorzugte Stärken sind Getreide-, Mais- und Kartoffelstärke. Besonders bevorzugt sind Getreide- und Maisstärke, ganz besonders bevorzugt Maisstärke.

Erfindungsgemäße Papierstreichmassen können zusätzlich weitere Hilfsstoffe enthalten, z.B. Füllstoffe, Co-Bindemittel und Verdicker zur weiteren Optimierung von Viskosität und Wasserretention, optische Aufheller, Dispergatoren, Tenside, Gleitmittel (z.B. Calciumstearat und Wachse), Neutralisationsmittel (z.B. NaOH oder Ammoniumhydroxid) zur pH-Werteinstellung, Entschäumer, Entlüftungsmittel, Konservierungsmittel (z.B. Biocide), Verlaufshilfsmittel, Farbstoffe (insbesondere lösliche Farbstoffe) etc. Als Verdicker kommen neben synthetischen Polymerisaten (z.B. vernetztes Polyacrylat), insbesondere Cellulosen, vorzugsweise Carboxymethylcellulose in Betracht. Optische Aufheller sind z.B. Fluoreszens- oder Phosphoreszensfarbstoffe, insbesondere Stilbene.

Es handelt sich vorzugsweise um eine wässrige Papierstreichmasse; sie enthält Wasser insbesondere bereits durch die Zubereitungsform der Bestandteile (wässrige Polymerdispersionen, wässrige Pigment-Slurries); die gewünschte Viskosität kann durch Zugabe von weiterem Wasser eingestellt werden. Übliche Feststoffgehalte der Papierstreichmassen liegen im Bereich von 30 bis 80 Gew.-%. Der pH-Wert der Papierstreichmasse wird vorzugsweise auf Werte von 6 bis 11, insbesondere 7 bis 10 eingestellt.

Gegenstand der Erfindung ist auch mit einer erfindungsgemäßen Papierstreichmasse beschichtetes Papier oder Karton und ein Verfahren zum Streichen von Papier oder Karton, wobei
- eine wässrige Polymerdispersion erfindungsgemäß hergestellt wird; und
- mit dieser Polymerdispersion, mindestens einem Pigment und optionalen weiteren Hilfsstoffe eine Papierstreichmasse hergestellt wird; und die Papierstreichmasse auf mindestens eine Oberfläche von Papier oder Karton aufgebracht wird.

Die Papierstreichmasse wird vorzugsweise auf unbeschichtete Rohpapiere oder unbeschichteten Karton aufgetragen. Die Menge beträgt im allgemeinen 1 bis 50 g, vorzugsweise 5 bis 30 g (fest, d. h. ohne Wasser oder sonstige bei 21 ° C, 1 bar flüssige Lösemittel) pro Quadratmeter. Die Beschichtung kann durch übliche Auftragsverfahren erfolgen, z.B. mittels Leimpresse, Filmpresse, Bladecoater, Luftbürste, Rakel, Vorhangstreichverfahren (curtain coating) oder Spray-Coater. Je nach Pigmentsystem können die wässrigen Dispersionen der wasserlöslichen Copolymere in Papierstreichmassen für den Grundstrich und/oder für den Deckstrich verwendet werden.

Erfindungsgemäße Papierstreichmassen haben gute anwendungstechnische Eigenschaften. Sie haben ein gutes Laufverhalten in Papierbeschichtungsverfahren und eine hohe Bindekraft. Die beschichteten Papiere und Kartone haben eine gute Oberflächenfestigkeit, insbesondere eine sehr hohe Nass- und Trockenrupffestigkeit. Sie sind in den üblichen Druckverfahren, wie Hochdruck, Tiefdruck, Offsetdruck, Digitaldruck, Inkjet-Druck, Flexodruck, Zeitungsdruck, Buchdruck, Sublimationsdruck, Laserdruck, elektrophotographischer Druck oder einer Kombination dieser Druckverfahren gut bedruckbar.

### Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion. Die Angabe pphm (parts per hundred monomers) bezeichnet den Gewichtsanteil bezogen auf 100 Gewichtsteile Monomer.

Wenn im Rahmen der Beispiele Wasser eingesetzt wurde, wurde demineralisiertes Wasser verwendet.

### Glasübergangstemperatur T_{G}

Die Bestimmung der Glasübergangstemperatur erfolgt gemäß DIN 53765 mittels eines DSC820-Geräts, Serie TA8000 der Fa. Mettler-Toledo Int. Inc.

### Bestimmung des Gelgehalts

Aus der Dispersion wird durch Trocknen in einer Silikonform ein Polymerfilm hergestellt. Aus diesem werden Rechtecke von ca. 2x1,5 cm Seitenlänge herausgestanzt und gewogen. Die Stücke werden dann in eine Petrischale mit Methylethylketon gelegt und 48 Stunden bei Raumtemperatur dort belassen. Dabei löst sich der unvernetzte Anteil des Polymers in dem Lösemittel. Nach Ablauf dieser Zeit werden die Polymerstücke aus dem Lösemittel entnommen, eine Stunde bei 140 ° C getrocknet und erneut gewogen. Der Gewichtsverlust entspricht dem löslichen Anteil des Polymers und der unlösliche Anteil ist das sogenannte Gel. Dieser unlösliche Gewichtsanteil bezogen auf das Gewicht des getrocknete Gesamtpolymer ist der sogenannte Gelgehalt.

### Bestimmung des Gehalts an 4-PCH

Der Gehalt an 4-Phenylcyclohexen wird mittels Gaschromatographie (Direkteinspritzung) bestimmt. Angabe in ppm bezogen auf die Dispersion.

### Bestimmung des Koagulats

Die Menge an Koagulat in der Dispersion bezieht sich auf Teilchen, deren Durchmesser >45 *µ*m ist. Sie wurde bestimmt, indem man die fertige Dispersion durch ein Sieb mit bekanntem Porendurchmesser filtrierte.

### Bestimmung der Thermovergilbung

Die Thermovergilbung wird an gestrichenem Papier bestimmt. Die zu prüfende Streichfarbe wird mittels einer Laborstreichmaschine einseitig auf ein Streichrohpapier aufgetragen und mittels eines IR-Strahlers getrocknet. Das Gewicht der aufgetragenen Strichschicht beträgt 10 g/m². Die CIE-Weiße der gestrichenen Seite des so hergestellten Papiers wird bestimmt. Danach wird es in einem Umlufttrockenschrank bei 120 ° C für 48 Stunden gelagert. Anschließend wird die CIE-Weiße des gelagerten Papiers gemessen. Die Differenz (Δ) der beiden Messungen ergibt die Vergilbung. Ein Wert von 0 bedeutet keine Vergilbung. Umso kleiner der Wert, umso geringer die Vergilbung.

In den Beispielen wurden folgende Einsatzstoffe verwendet:

| | |
|---|---|
| Emulgator A: | Natriumlaurylsulfat in Form einer 15 gew.-%igen Lösung (Disponil^{®} SDS der Fa. BASF) |
| Emulgator B: | ethoxiliertes Natriumlaurylethersulfat in Form einer 28 gew.-%igen Lösung (Texapon^{®} NSO P der Fa. BASF) |
| Komplexbildner: | EDTA in Form einer 2 gew.-%igen Lösung (Trilon BX der Fa. BASF) |
| Saatlatex: | Polystyrolsaat in Form einer 29,7 gew.-%igen Dispersion mit ca. 30 nm Teilchengröße (bestimmt mittels analytischer Ultrazentrifuge) |
| Initiator A: | 7 gew.-%ige Lösung von Natriumperoxodisulfat (NaPS) |
| Initiator B: | 10 gew.-%ige Lösung von tert.-Butylhydroperoxid |
| Reduktionsmittel: | 13 gew.-%ige Lösung von Acetonbisulfit |
| Abgebaute Stärke: | handelsüblicher 72 gew.-%iger wässriger Glucosesirup mit einem DE-Wert (Dextroseäquivalent) von 28 |

In allen Beispielen erfolgte die Dosierung der Zuläufe in einem gleichmäßigen Mengenstrom.

### Herstellung der Emulsionspolymerisate

Die nachfolgenden Mengenangaben in pphm (parts per hundred monomer) sind auf 100 Gewichtsanteile Gesamtmonomer bezogen.

### Beispiel 1 Emulsionspolymerisation von Styrol/Butadien/Acrylsäure

### Vorlage:

| | |
|---|---|
| 47,48 g | Styrol (2,11 pphm) |
| 192,86 g | einer 7 gew.-%igen wässrigen Lösung von Itakonsäure (0,6 pphm) |
| 4,5 g | Acrylsäure (0,2 pphm) |
| 75,76 g | einer 29,7 gew.-%igen Dispersion eines Polystyrollatex mit einer mittleren Teilchengröße von 30 nm (1,0 pphm) |
| 18 g | einer 15 gew.-%igen Lösung von Natriumlaurylsulfat (Emulgator A) (0,12 pphm) |
| 11,25 g | einer 2 gew.-%igen Lösung von EDTA (Komplexbildner) (0,01 pphm) |

| | |
|---|---|
| 86,79 g | einer 7 gew.-%igen Lösung von Natriumperoxodisulfat (Initiator A) (0,27 pphm) |

### Zulauf 1:

| | |
|---|---|
| 1252,13 g | Styrol (55,6 pphm) |

### Zulauf 2:

| | |
|---|---|
| 90 g | Acrylsäure (4,0 pphm) |
| 36 g | einer 15 gew.-%igen Lösung von Natriumlaurylsulfat (0,24 pphm) |
| 40,18 g | einer 28 gew.-%igen Lösung von ethoxiliertem Natriumlaurylethersulfat (Emulgator B) (0,5 pphm) |
| 37,5 g | 15 gew.-%ige Natronlauge (0,25 pphm) |
| 598 ml | Wasser |

### Zulauf 3:

| | |
|---|---|
| 842,4 g | Butadien (37,44 pphm) |

### Zulauf 4:

| | |
|---|---|
| 273,21 g | einer 7 gew.-%igen Lösung von Natriumperoxodisulfat (Initiator A) (0,85 pphm) |

### Zulauf 5:

| | |
|---|---|
| 231,7 g | einer 10 gew.-%igen Lösung von tert.-Butylhydroperoxid als (Initiator B) (1,03 pphm) |

### Zulauf 6:

| | |
|---|---|
| 66,98 g | Acetonbisulfit (0,39 pphm) |

In einem 6 I Druckreaktor wurden die Komponenten der Vorlage sowie 360 ml Wasser vorgelegt. Die Komponenten der Vorlage wurden gemischt und auf 90° C erwärmt. Dann wurde durch Zusatz von 0,27 pphm Initiator A die Polymerisation gestartet.

Unmittelbar im Anschluss wurde mit den Zuläufen 1, 2 und 4 begonnen (Zeitpunkt: 0 Minuten), wobei die Zuläufe 1 und 2 über 4 Stunden und der Zulauf 4 über einen Zeitraum von 4 Stunden und 15 Minuten erfolgte. Der Zulauf von Butadien (Zulauf 3) startete 30 Minuten nach Beginn (Zeitpunkt: 30 Minuten) der Zuläufe 1, 2 und 4 und erfolgte über 3,5 Stunden. Der Zulauf 5 startete gleichzeitig mit dem Butadien (Zeitpunkt: 30 Minuten). Dabei wurden eine Menge von 0,8 pphm über 3 Stunden dosiert. Dann wurde die Zugabe unterbrochen und nach 75 Minuten wieder aufgenommen. Diese zweite Dosierstufe erfolgte über einen Zeitraum von 2 Stunden, parallel mit der Zugabe von Zulauf 6. Unmittelbar bevor die Zugabe von Zulauf 5 wieder aufgenommen wurde, wurden 15 g einer 15 gew.-%ige Natronlauge (0,1 pphm) zugegeben. Schließlich wurde auf Raumtemperatur abgekühlt und mit Natronlauge auf einen pH-Wert von 6-7 neutralisiert.

Die Dosierung der verschiedenen Zuläufe in Beispiel 1 lässt in folgender Übersicht widergeben:

| Zeit [min] | | Zulauf 1 | Zulauf 2 | Zulauf 3 | Zulauf 4 | Zulauf 5 | Zulauf 6 |
|---|---|---|---|---|---|---|---|
| 0 | Vorlage 90° C + Initiator A + Monomere der Vorlage | | | | | | |
| 0 | | gestartet | gestartet | | gestartet | | |
| 30 | | | | gestartet | | gestartet | |
| 210 | | | | | | gestoppt (0,8 pphm) | |
| 240 | | gestoppt | gestoppt | gestoppt | | | |
| 255 | | | | | gestoppt | | |
| 285 | Zugabe von Natronlauge | | | | | gestartet | gestartet |
| 405 | | | | | | gestoppt | gestoppt |

### Beispiel 2 (Vergleichsbeispiel, ohne verzögerte Zugabe des Butadiens)

In Analogie zu Beispiel 1 wurde Beispiel 2 durchgeführt, mit dem Unterschied, dass der Start der Zuläufe 1 bis 4 zum selben Zeitpunkt erfolgt (alles zum Zeitpunkt 0). Zulauf 3 endet zum Zeitpunkt: 240 min.

### Beispiel 3 und 4

Beispiele 3 und 4 wurden in Analogie zu Beispiel 1 durchgeführt, wobei die Zugabe des Butadiens 60 Minuten (Beispiel 3) bzw. um 90 Minuten (Beispiel 4) nach Beginn der Zuläufe 1, 2 und 4 gestartet wurde. Zulaufende war für die Zuläufe 1 bis 3 nach 240 min.

### Beispiel 5

Beispiel 5 wurde in Analogie zu Beispiel 1 durchgeführt, mit dem Unterschied, dass die Menge an Styrol um 2 pphm erhöht wurde (57,6 pphm Styrol) und die Menge an Butadien um 2 pphm gesenkt wurde (35,44 pphm Butadien).

### Beispiel 6 (Vergleichsbeispiel ohne verzögerte Zugabe)

Die Emulsionspolymerisation wurde wie in Beispiel 1 durchgeführt, mit dem Unterschied, dass die Zudosierung von Zulauf 3 zeitgleich mit den Zuläufen 1, 2 und 4 startete und nach 240 Minuten endete. Ein weiterer Unterschied bestand darin, dass 53,6 pphm Styrol zudosiert wurde (um 2 pphm gesenkt) und die Menge an Butadien um 2 pphm erhöht wurde (39,44 pphm Butadien).

### Beispiel 7

In Analogie zu Beispiel 1 wurde Beispiel 7 durchgeführt, wobei Styrol um 8 pphm erhöht wurde (53,6 pphm Styrol) und die Menge an Butadien um 8 pphm gesenkt wurde (29,44 pphm Butadien).

### Beispiel 8

### (Vergleichsbeispiel zu Beispiel 7, ohne verzögerte Zugabe des Butadiens)

Die Emulsionspolymerisation wurde wie in Beispiel 1 durchgeführt, mit dem Unterschied, dass die Zudosierung von Zulauf 3 zeitgleich mit den Zuläufen 1, 2 und 4 startete und und zeitgleich mit Zulauf 1 und 2 endete (nach 240 min). Ein weiterer Unterschied bestand darin, dass die Menge an Styrol um 8 pphm erhöht wurde und die Menge an Butadien um 8 pphm gesenkt wurde.

### Beispiel 9

### (Vergleichsbeispiel zu Beispiel 7)

Die Emulsionspolymerisation wurde wie in Beispiel 1 durchgeführt, mit dem Unterschied, dass die Menge an Styrol um 10 pphm erhöht wurde und die Menge an Butadien um 10 pphm gesenkt wurde.

**Tabelle 1: Übersicht über die Reaktionsbedingungen der verschiedenen Beispiele sowie die Eigenschaften der Polymerdispersionen**

| Bsp | Butadien-Verzögerung [min] | Butadien [pphm] | Styrol [pphm] | T_{G} [° C] | Gelgehalt [%] | PCH-Gehalt [ppm] |
|---|---|---|---|---|---|---|
| 1 | 30 | 37,44 | 55,6 | 4 | 91 | 10 |
| 2 n.e. | 0 | 37,44 | 55,6 | 9 | 90 | 40 |
| 3 | 60 | 37,44 | 55,6 | -4 | 90 | 20 |
| 4 | 90 | 37,44 | 55,6 | -9 | 92 | 15 |
| 5 | 30 | 35,44 | 57,6 | 10 | 88 | 15 |
| 6 n.e. | 0 | 39,44 | 53,6 | 3 | 93 | 35 |
| 7 | 30 | 29,44 | 63,6 | 21 | 88 | 10 |
| 8 n.e. | 0 | 29,44 | 63,6 | 26 | 87 | 35 |
| 9 | 30 | 27,44 | 65,6 | 26 | 84 | 15 |

| | | | | | | |
|---|---|---|---|---|---|---|
| n.e. nicht erfindungsgemäß | | | | | | |

Alle aus den Beispielen 1-9 erhaltenen Dispersionen wiesen geringe Koagulatmengen auf.

### Beispiel 10

### Vorlage:

| | |
|---|---|
| 93,96 g | einer 29,7 gew.-%igen Dispersion eines Polystyrollatex mit einer mittleren Teilchengröße von 30 nm (1,6 pphm) |
| 6,25 g | einer 28 gew.-%igen Lösung von ethoxiliertem Natriumlaurylethersulfat (Emulgator B) (0,1 pphm) |
| 8,75 g | einer 2 gew.-%igen Lösung von EDTA (Komplexbildner) (0,01 pphm) |
| 743,75 g | eines 72 gew.-%igen wässrigen Glucosesirups (DE-Wert 28) (30 pphm) |

| | |
|---|---|
| 25 g | einer 7 gew.-%igen Lösung von Natriumperoxodisulfat (Initiator A) (0,1 pphm) |

### Zulauf 1:

| | |
|---|---|
| 997,5 g | Styrol (57 pphm) |
| 52,5 g | Acrylsäure (3 pphm) |

### Zulauf 2:

| | |
|---|---|
| 250 g | einer 7 gew.-%igen wässrigen Lösung von Itakonsäure (1,0 pphm) |

### Zulauf 3:

| | |
|---|---|
| 682,5 g | Butadien (39 pphm) |

### Zulauf 4:

| | |
|---|---|
| 175 g | einer 7 gew.-%igen Lösung von Natriumperoxodisulfat (Initiator A) (0,7 pphm) |

### Zulauf 5:

| | |
|---|---|
| 192,5 g | einer 10 gew.-%igen Lösung von tert.-Butylhydroperoxid (Initiator B) (1,1 pphm) |

### Zulauf 6:

| | |
|---|---|
| 45,42 g | Acetonbisulfit (0,34 pphm) |

In einem 6 I Druckreaktor wurde die Komponenten der Vorlage in 442,08 g Wasser vorgelegt. Diese Vorlage wurde auf 90 ° C erwärmt. Dann wurde 0,1 pphm Initiator A zugesetzt. Anschließend wurden die Zuläufe 1, 2, 4, und 5 zeitgleich gestartet, wobei Zulauf 2 über einen Zeitraum von 30 Minuten zugegeben wurde und die Zuläufe 1 und 4 über einen Zeitraum von 2,5 Stunden. Der Zulauf von Butadien (Zulauf 3) startete 30 Minuten nach Beginn der Zuläufe 1, 2, 4 und 5 und erfolgte über 2 Stunden (Endpunkt nach 150 Minuten). Der Zulauf 5 wurde nach 2,5 Stunden nach Zugabe von 0,9 pphm unterbrochen. Nach 3 Stunden 30 Minuten wurden 70 g einer 15 gew.-%igen Natronlauge (0,6 pphm) zudosiert und anschließend die Restmenge des Zulaufs 5 parallel mit Zulauf 6 über 2 Stunden zudosiert. Schließlich wurde auf Raumtemperatur abgekühlt und mit Natronlauge auf einen pH-Wert von 6-7 neutralisiert.

### Beispiel 11 (Vergleichsbeispiel ohne verzögerte Zugabe des Diens)

Die Emulsionspolymerisation wurde wie in Beispiel 10 durchgeführt, mit dem Unterschied, dass der Start der Zuläufe 1, 2, 3, 4 und 5 zum selben Zeitpunkt erfolgt (alles zum Zeitpunkt 0) und zum selben Zeitpunkt endet (Zeitpunkt 150 min).

### Beispiel 12 (erfindungsgemäß)

Beispiel 12 wurden in Analogie zu Beispiel 10 durchgeführt, wobei die Zugabe des Butadiens 15 Minuten nach Beginn der Zuläufe 1, 2, 4 und 5 gestartet wurde und gemeinsam mit diesen endete.

**Tabelle 2: Übersicht über die Reaktionsbedingungen der Beispiele 10-12 sowie die Eigenschaften der Polymerdispersionen**

| Bsp | Butadien-Verzögerung [min] | Butadien [pphm] | Styrol [pphm] | T_{G} [° C] | Gelgehalt [%] | PCH-Gehalt [ppm] |
|---|---|---|---|---|---|---|
| 10 | 30 | 39 | 57 | -3 | 95 | <10 |
| 11 | 0 | 39 | 57 | 6 | 95 | 25 |
| 12 | 15 | 39 | 57 | 4 | 95 | <10 |

| | | | | | | |
|---|---|---|---|---|---|---|
| T_{G} Glasübergangstemperatur | | | | | | |

Alle nach den Beispielen 1-12 erhaltenen Dispersionen wiesen geringe Koagulatmengen auf.

Die Teilchengrößen der Polymerteilchen ergaben sich durch die Saatsteuerung und zeigten durch die Verzögerungen des Dienzulaufs keine signifikanten Abweichungen.

Aus den Tabellen 1 und 2 sind deutlich die Vorteile einer Fahrweise mit Verzögerung des Dienzulaufs ersichtlich. Die Menge des Geruchsverursachers 4-PCH ist jeweils deutlich geringer als in den nicht erfindungsgemäßen Beispielen 2, 6, 8 und 11. Gleichzeitig kann zur Erzielung einer gewünschten Glastemperatur eine geringere Menge des Diens eingesetzt werden (siehe Versuche 1 und 6, 2 und 5 und 8 und 9). Für die Herstellung eines Polymers mit nahezu gleicher Glasübergangstemperatur T_{G} reicht bei Einsatz des erfindungsgemäßen Verfahrens eine um 2 pphm reduzierte Einsatzmenge an Butadien aus.

Bei gleichem Anteil an Dien wird der Gelgehalt der Dispersionen durch den verzögerten Zulauf nicht signifikant verändert.

Herstellung der Papierstreichmassen:
Die Zubereitung der Streichfarbe erfolgte in einem Rühraggregat, in das die einzelnen Komponenten nacheinander zugeführt wurden. Die Pigmente wurden in vordispergierter Form (slurry) zugegeben. Die anderen Komponenten wurden nach den Pigmenten zugegeben, wobei die Reihenfolge der Reihenfolge im angegebenen Streichfarbenrezept entsprach. Die Einstellung des Endfeststoffgehalts erfolgte durch die Zugabe von Wasser.

Die Streichfarbe wurde mittels einer Laborstreichmaschine einseitig auf ein Streichrohpapier aufgetragen und mittels eines IR-Strahlers getrocknet. Das Gewicht der aufgetragenen Strichschicht betrug ca. 10 g/m².

### Herstellung einer Streichfarbe

Die Mengenangaben beziehen sich jeweils auf den Feststoffgehalt.

| | |
|---|---|
| 100 Gew.-Teile | präzipitiertes Calciumcarbonat (Opacarb A 40 der Fa. Specialty Minerals) |
| 9,5 Gew.-Teile | Emulsionspolymerisat des jeweiligen Beispiels |
| 0,25 Gew.-Teile | Rheologiehilfsmittel (Sterocoll FS der Fa BASF SE)) |

Die Zubereitung der Streichfarbe erfolgte in einem Rühraggregat, in das die einzelnen Komponenten nacheinander zugeführt wurden.

Das Pigment (präzipitiertes Calciumcarbonat) wurde in vordispergierter Form (slurry) zugegeben. Die anderen Komponenten wurden nach obiger Reihenfolge zugegeben. Die Einstellung des Endfeststoffgehalts erfolgte durch die Zugabe von Wasser.

### Streichfarbendaten:

Feststoffgehalt 66 Gew.-%
Viskosität (Brookfield RVT, Spindel 4, 100 Upm): 1000-1400 mPas

**Tabelle 3: Thermovergilbung des beschichteten Papiers d**

| Papier | Polymerdispersion von Beispiel | Polymer T_{G} [° C] | Thermovergilbung Δ CIE nach 48 h bei 120° C |
|---|---|---|---|
| P1 | 1 | 4 | 30 |
| P2 n.e. | 2 | 9 | 30 |
| P3 | 3 | -4 | 31 |
| P4 | 4 | -9 | 30 |
| P5 | 5 | 10 | 28 |
| P6 n.e. | 6 | 3 | 33 |
| P7 | 7 | 21 | 25 |
| P8 n.e. | 8 | 26 | 24 |
| P9 | 9 | 26 | 20 |
| P10 | 10 | -3 | 31 |
| P11 n.e. | 11 | 6 | 32 |
| P12 | 12 | 4 | 31 |

| | | | |
|---|---|---|---|
| n.e.: nicht erfindungsgemäß | | | |

Die Beispiele zeigen, dass Papiere gestrichen mit Papierstreichmassen mit Polymeren gleicher Glastemperatur eine geringere Thermovergilbung aufweisen, wenn die Polymere nach dem erfindungsgemäßen Verfahren hergestellt wurden.

### Beispiel 13 (nicht erfindungsgemäß):

Es wurde in Analogie zum Comparative Example 1 der EP 1408059 A1 polymerisiert mit dem Unterschied, dass die einzelnen Zuläufe in Stufen mit jeweils konstanter Dosierrate zugegeben wurden.

### Vorlage:

| | |
|---|---|
| 10,0 g | einer 2 gew.-%igen Lösung von EDTA (Komplexbildner) (0,01 pphm) |
| 59,07 g | einer 33 gew.-%igen Dispersion eines Polystyrollatex mit einer mittleren Teilchengröße von 30 nm (0,97 pphm) |

### Zulauf 1:

| | |
|---|---|
| 40,4 g | Acrylsäure (2,02 pphm) |
| 8,0 g | einer 20 gew.-%igen Lösung von Alkylbenzolsulfonat (Disponil LDBS 20) (0,08 pphm) |
| 649,9 g | Wasser |

### Zulauf 2:

| | |
|---|---|
| 353,6 g | Styrol (17,68 pphm) |
| 7,47 g | tert.-Dodecylmercaptan (0,37 pphm) |

### Zulauf 3:

| | |
|---|---|
| 949,4 g | Butadien (47,47 pphm) |

### Zulauf 4:

| | |
|---|---|
| 288,6 g | einer 7 gew.-%igen Lösung von Natriumperoxodisulfat (Initiator) (1,01 pphm) |
| 405 g | Wasser |

### Zulauf 5:

| | |
|---|---|
| 656,6 g | Styrol (32,83 pphm) |
| 3,64 g | tert.-Dodecylmercaptan (0,18 pphm) |

In einem 6 I Druckreaktor wurde die Komponenten der Vorlage sowie 809 ml Wasser vorgelegt. Die Komponenten der Vorlage wurden gemischt und auf 78° C erwärmt. Dann wurde Zulauf 4 gestartet und über einen Zeitraum von 8 Stunden zudosiert.

5 Minuten nach Zulaufstart 4 wurde mit den Zuläufen 1, 2 und 3 begonnen (Zeitpunkt: 5 Minuten), wobei der Zulauf 1 über eine Dauer von 6 Stunden und der Zulauf 2 insgesamt über 3 Stunden und der Zulauf 3 insgesamt über 6 Stunden erfolgte.

Die Zuläufe 1 und 4 erfolgten kontinuierlich.

Die Zuläufe 2 und 3 wurden in folgenden Stufen dosiert:

| | | | |
|---|---|---|---|
| Zulauf 2: | 28g in 22 min | Zulauf 3: | 181g in 45 min |
| | 32,5g in 22 min | | 163,2g in 45 min |
| | 37g in 22 min | | 145,4g in 45 min |
| | 41,5g in 22 min | | 127,6g in 45 min |
| | 46g in 22 min | | 109,8g in 45 min |
| | 50,5g in 22 min | | 92g in 45 min |
| | 55g in 22 min | | 74,2g in 45 min |
| | 70,7g in 26 min | | 56,2g in 45 min |

Nach Ende des Zulaufs 2 wurde Zulauf 5 gestartet und in insgesamt 3 Stunden zugegeben.

Die Zugabe erfolgte in folgenden Stufen:

| | |
|---|---|
| Zulauf 5: | 56g in 22 min |
| | 62,9g in 22 min |
| | 69,7g in 22 min |
| | 76,6g in 22 min |
| | 83,5g in 22 min |
| | 90,4g in 22 min |
| | 97,3g in 22 min |
| | 123,8g in 26 min |

Nach dem Ende von Zulauf 4 wurde für eine Stunde nachpolymerisiert und dabei kontinuierlich 138,4 g 10 gew.-%ige Natronlauge zugegeben.

### Beispiel 14 (erfindungsgemäß)

Das Beispiel wurde analog zu Beispiel 13 durchgeführt, mit dem Unterschied, dass der Zulauf 3 (Butadien) eine halbe Stunde später gestartet wurde (Zeitpunkt 35 min) und die Zuläufe 2, 3 und 5 kontinuierlich zudosiert wurden.

Die gemessenen Werte an 4-PCH betrugen:

| | |
|---|---|
| Beispiel 13: | 40 ppm PCH |
| Beispiel 14: | 20 ppm PCH. |

## Patentansprüche

1. Verfahren zur Herstellung einer wässrigen Polymerdispersion durch radikalisch initiierte wässrige Emulsionspolymerisation, **dadurch gekennzeichnet, dass** man in einem wässrigen Medium
| | |
|---|---|
| (a) 40 bis 75 Gew.-Teile | mindestens einer vinylaromatischen Verbindung und |
| (b) 24,9 bis 59,9 Gew.-Teile | mindestens eines konjugierten aliphatischen Diens |
| (c) 0,1 bis 10 Gew.-Teile | mindestens eines Säuregruppen enthaltenden Monomers und |
| (d) 0 bis 20 Gew.-Teile | mindestens eines sonstigen monoethylenisch ungesättigten Monomers, |
wobei sich die Mengen der Monomeren (a) bis (d) auf 100 Gew.-Teile aufsummieren, nach einem Monomerzulaufverfahren in Gegenwart eines Radikalinitiators polymerisiert, mit der Maßgabe, dass
- die vinylaromatische Verbindung unter Polymerisationsbedingungen in einem kontinuierlichen Mengenstrom über einen Zeitraum von mindestens 120 Minuten zudosiert wird,
- die Dosierung des konjugierten aliphatischen Diens zu einem Zeitpunkt gestartet wird, zu dem bereits mindestens 5 % und höchstens 30 % der vinylaromatischen Verbindung in einem kontinuierlichen Mengenstrom zudosiert sind,
- während der Polymerisation kein Kettenübertragungsmittel ausgewählt unter aliphatischen und/oder araliphatischen Halogenverbindungen, organischen Thioverbindungen und substituierten Thiolen eingesetzt wird und
- gegebenenfalls die Polymerisation in einem wässrigen Polymerisationsgemisch initiiert wird, das bis zu 5 % der vinylaromatischen Verbindung enthält und kein aliphatisches Dien enthält.

2. Verfahren nach Anspruch 1, **dadurch gekennzeichnet, dass** die vinylaromatische Verbindung Styrol und/oder Methylstyrol und das konjugierte aliphatische Dien 1,3-Butadien und/oder Isopren ist.

3. Verfahren nach Anspruch 1 oder 2, **dadurch gekennzeichnet, dass** der Radikalinitiator ausgewählt wird unter anorganischen Peroxiden und organischen Peroxiden.

4. Verfahren nach einem der Ansprüche 1 bis 3, **dadurch gekennzeichnet, dass** man einen Anteil anorganischen Peroxid, zum Initiieren der Polymerisation wählt und anschließend die restliche Radikalinitiatormenge in einem kontinuierlichen Mengenstrom zudosiert.

5. Verfahren nach einem der Ansprüche 1 bis 4, **dadurch gekennzeichnet, dass** man ein organisches Peroxid ab dem Zeitpunkt zudosiert, zu dem bereits mindestens 5 % und 20 % der vinylaromatischen Verbindung zudosiert sind.

6. Verfahren nach einem der Ansprüche 1 bis 5, **dadurch gekennzeichnet, dass** man das konjugierte aliphatische Dien in einem kontinuierlichen Mengenstrom über einen Zeitraum von mindestens 60 Minuten zudosiert.

7. Verfahren nach einem der Ansprüche 1 bis 5, **dadurch gekennzeichnet, dass** man 15 bis 60 Gew.-Teile einer abgebauten Stärke auf 100 Gew.-Teile der Monomeren einsetzt.

8. Wässrige Polymerdispersion erhältlich durch radikalisch initiierte Emulsionspolymerisation gemäß einem der Ansprüche 1 bis 7.

9. Verwendung der wässrigen Polymerdispersion nach Anspruch 8 als Bindemittel, Klebstoff, Schlichtemittel für Fasern, zur Herstellung von Überzügen oder zur Herstellung von Papierstreichmassen.

10. Papierstreichmasse enthaltend (i) anorganische Pigmente und (ii) eine wässrige Polymerdispersion nach Anspruch 8.

11. Papierstreichmasse nach Anspruch 10, **dadurch gekennzeichnet, dass** die Polymerisate der wässrigen Polymerdispersion in einer Menge von 1 bis 50 Gew.-Teilen, bezogen auf die Gesamtmenge an Pigmenten, eingesetzt werden und dass die Pigmente in einer Menge von 80 bis 95 Gewichtsteilen, bezogen auf den Gesamtfeststoffgehalt, enthalten sind und ausgewählt sind aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und dass die Papierstreichmasse zusätzlich mindestens einen Hilfsstoff enthält, ausgewählt aus der Gruppe bestehend aus Verdickern, weiteren polymeren Bindemitteln, Co-Bindemitteln, optischen Aufhellern, Füllstoffen, Verlaufshilfsmitteln, Dispergatoren, Tensiden, Gleitmitteln, Neutralisationsmitteln, Entschäumern, Entlüftungsmitteln, Konservierungsmitteln und Farbstoffen.

12. Mit einer Papierstreichmasse gemäß Anspruch 10 oder 11 beschichtetes Papier oder Karton.

13. Verfahren zum Streichen von Papier oder Karton, wobei
- eine wässrige Polymerdispersion nach Anspruch 8 zur Verfügung gestellt wird; und
- mit der wässrigen Polymerdispersion, mindestens einem Pigment und optionalen weiteren Hilfsstoffen eine Papierstreichmasse hergestellt wird; und
- und die Papierstreichmasse auf mindestens eine Oberfläche von Papier oder Karton aufgebracht wird.

## Claims

1. A process for producing an aqueous polymer dispersion by free-radically initiated aqueous emulsion polymerization, which comprises polymerizing, in an aqueous medium,
(a) 40 to 75 parts by weight of at least one vinylaromatic compound and
(b) 24.9 to 59.9 parts by weight of at least one conjugated aliphatic diene
(c) 0.1 to 10 parts by weight of at least one monomer comprising acid groups and
(d) 0 to 20 parts by weight of at least one other monoethylenically unsaturated monomer,
the amounts of the monomers (a) to (d) adding up to 100 parts by weight, in a monomer feed process in the presence of a free-radical initiator, with the proviso that
- the vinylaromatic compound is metered in under polymerization conditions in a continuous mass flow over a period of at least 120 minutes,
- the metering of the conjugated aliphatic diene is started at a time at which at least 5% and not more than 30% of the vinylaromatic compound has already been metered in in a continuous mass flow,
- no chain transfer agent selected from aliphatic and/or araliphatic halogen compounds, organic thio compounds and substituted thiols is used during the polymerization, and
- optionally, the polymerization is initiated in an aqueous polymerization mixture comprising up to 5% of the vinylaromatic compound and comprising no aliphatic diene.

2. The process according to claim 1, wherein the vinylaromatic compound is styrene and/or methylstyrene and the conjugated aliphatic diene is 1,3-butadiene and/or isoprene.

3. The process according to claim 1 or 2, wherein the free-radical initiator is selected from inorganic peroxides and organic peroxides.

4. The process according to any of claims 1 to 3, wherein a proportion of inorganic peroxide is selected for initiating the polymerization and then the remaining free-radical initiator amount is metered in in a continuous mass flow.

5. The process according to any of claims 1 to 4, wherein an organic peroxide is metered in starting from the time at which at least 5% and 20% of the vinylaromatic compound has already been metered in.

6. The process according to any of claims 1 to 5, wherein the conjugated aliphatic diene is metered in in a continuous mass flow over a period of at least 60 minutes.

7. The process according to any of claims 1 to 5, wherein 15 to 60 parts by weight of a degraded starch are used per 100 parts by weight of the monomers.

8. An aqueous polymer dispersion obtainable by free-radically initiated emulsion polymerization according to any of claims 1 to 7.

9. The use of the aqueous polymer dispersion according to claim 8 as a binder, adhesive, sizing agent for fibers, for the production of coatings or for the production of paper coating slips.

10. A paper coating slip comprising (i) inorganic pigments and (ii) an aqueous polymer dispersion according to claim 8.

11. The paper coating slip according to claim 10, wherein the polymers of the aqueous polymer dispersion are used in an amount of 1 to 50 parts by weight based on the total amount of pigments, and wherein the pigments are present in an amount of 80 to 95 parts by weight based on the total solids content and are selected from the group consisting of calcium sulfate, calcium aluminate sulfate, barium sulfate, magnesium carbonate, calcium carbonate, silicas, aluminum oxides, aluminum hydroxide, silicates, titanium dioxide, zinc oxide, kaolin, alumina, talc and silicon dioxide, and wherein the paper coating slip additionally comprises at least one auxiliary selected from the group consisting of thickeners, further polymeric binders, co-binders, optical brighteners, fillers, leveling agents, dispersants, surfactants, lubricants, neutralizing agents, defoamers, deaerators, preservatives and dyes.

12. A paper or board coated with a paper coating slip according to claim 10 or 11.

13. A process for coating paper or board, wherein
- an aqueous polymer dispersion according to claim 8 is provided; and
- a paper coating slip is produced using the aqueous polymer dispersion, at least one pigment and optional further auxiliaries; and
- the paper coating slip is applied to at least one surface of paper or board.

## Revendications

1. Procédé pour la préparation d'une dispersion aqueuse de polymère par polymérisation en émulsion aqueuse amorcée par voie radicalaire, **caractérisé en ce qu'**on mélange dans un milieu aqueux
(a) 40 à 75 parties en poids d'au moins un composé vinylaromatique et
(b) 24,9 à 59,9 parties en poids d'au moins un diène aliphatique conjugué,
(c) 0,1 à 10 parties en poids d'au moins un monomère contenant des groupes acides et
(d) 0 à 20 parties en poids d'au moins un autre monomère à insaturation monoéthylénique,
les quantités des monomères (a) à (d) s'additionnant à 100 parties en poids, selon un procédé d'addition de monomères en présence d'un amorceur radicalaire, étant entendu que
- le composé vinylaromatique est ajouté de façon dosée, dans des conditions de polymérisation en un courant quantitatif continu pendant une durée d'au moins 120 minutes,
- l'addition dosée du diène aliphatique conjugué est commencée à un instant auquel déjà au moins 5 % et au plus 30 % du composé vinylaromatique sont ajoutés de façon dosée dans un flux quantitatif continu,
- pendant la polymérisation n'est utilisé aucun agent de transfert de chaîne choisi parmi les composés halogénés aliphatiques et/ou araliphatiques, les composés thio organiques et les thiols substitués, et
- éventuellement la polymérisation est amorcée dans un mélange aqueux de polymérisation qui contient jusqu'à 5 % du composé vinylaromatique et ne contient pas de diène aliphatique.

2. Procédé selon la revendication 1, **caractérisé en ce que** le composé vinylaromatique est le styrène et/ou le méthylstyrène et le diène aliphatique conjugué est le 1,3-butadiène et/ou l'isoprène.

3. Procédé selon la revendication 1 ou 2, **caractérisé en ce que** l'amorceur radicalaire est choisi parmi les peroxydes inorganiques et les peroxydes organiques.

4. Procédé selon l'une quelconque des revendications 1 à 3, **caractérisé en ce qu'**on choisit une proportion de peroxyde inorganique pour l'amorçage de la polymérisation et ensuite ajoute par addition dosée la quantité restante d'amorceur radicalaire en un courant quantitatif continu.

5. Procédé selon l'une quelconque des revendications 1 à 4, **caractérisé en ce qu'**on ajoute par addition dosée un peroxyde organique à partir de l'instant auquel déjà au moins 5 % et 20 % du composé vinylaromatique sont ajoutés par addition dosée.

6. Procédé selon l'une quelconque des revendications 1 à 5, **caractérisé en ce qu'**on ajoute par addition dosée le diène aliphatique conjugué en un flux quantitatif continu pendant une durée d'au moins 60 minutes.

7. Procédé selon l'une quelconque des revendications 1 à 5, **caractérisé en ce qu'**on utilise 15 à 60 parties en poids d'un amidon dégradé pour 100 parties en poids des monomères.

8. Dispersion aqueuse de polymère pouvant être obtenue par polymérisation en émulsion amorcée par voie radicalaire selon l'une quelconque des revendications 1 à 7.

9. Utilisation de la dispersion aqueuse de polymère selon la revendication 8 en tant que liant, adhésif, agent d'ensimage pour fibres, dans la production de revêtements ou dans la production de matières de couchage pour papier.

10. Matière de couchage pour papier contenant (i) des pigments inorganiques et (ii) une dispersion aqueuse de polymère selon la revendication 8.

11. Matière de couchage pour papier selon la revendication 10, **caractérisée en ce que** les produits de polymérisation de la dispersion aqueuse de polymères sont utilisés en une quantité de 1 à 50 parties en poids, par rapport à la quantité totale de pigments, et **en ce que** les pigments sont contenus en une quantité de 80 à 95 parties en poids, par rapport à la teneur totale en matières solides, et sont choisis dans le groupe constitué par le sulfate de calcium, le sulfate-aluminate de calcium, le sulfate de baryum, le carbonate de magnésium, le carbonate de calcium, les silices, les oxydes d'aluminium, l'hydrate d'aluminium, les silicates, le dioxyde de titane, l'oxyde de zinc, le kaolin, l'alumine, le talc et le dioxyde de silicium et **en ce que** la matière de couchage pour papier contient en outre au moins un adjuvant choisi dans le groupe constitué par les épaississants, des liants polymères supplémentaires, des co-liants, les azurants optiques, charges, adjuvants d'étalement, dispersants, tensioactifs, lubrifiants, agents de neutralisation, antimousses, agents de désaération, conservateurs et colorants.

12. Papier ou carton revêtu avec une matière de couchage pour papier selon la revendication 10 ou 11.

13. Procédé pour le couchage de papier ou carton, dans lequel
- une dispersion aqueuse de polymère selon la revendication 8 est mise à disposition ; et
- une matière de couchage pour papier est produite avec la dispersion aqueuse de polymère, au moins un pigment et des adjuvants supplémentaires optionnels ; et
- la matière de couchage pour papier est appliquée sur au moins une surface de papier ou carton.
